(19)

Europäisches
Patentamt

European
Patent Office

Office européen
des brevets

(11)  **EP 2 647 988 B1**

(12)  **EUROPÄISCHE PATENTSCHRIFT**

(45) Veröffentlichungstag und Bekanntmachung des
Hinweises auf die Patenterteilung:
**13.05.2015  Patentblatt 2015/20**

(51) Int Cl.:
**G01N 27/409** *(2006.01)*     **G01N 27/406** *(2006.01)*

(21) Anmeldenummer: **13160835.8**

(22) Anmeldetag: **25.03.2013**

(54) **Verfahren sowie Vorrichtung zur Messung des Sauerstoffgehaltes oder des Sauerstoffpartialdruckes in einem Messgas**

Method and device for measuring the oxygen content or the partial oxygen pressure in a gas to be measured

Procédé et dispositif de mesure de la teneur en oxygène ou de la pression partielle d'oxygène dans un gaz de mesure

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2012  DE 102012103005**

(43) Veröffentlichungstag der Anmeldung:
**09.10.2013  Patentblatt 2013/41**

(73) Patentinhaber:
• **Reiter, Werner**
**3400 Klosterneuburg (AT)**
• **Soukup, Peter Klaus**
**2440 Gramatneusiedl (AT)**

(72) Erfinder:
• **Seyr, Peter**
**1120 Wien (AT)**
• **Reiter, Werner**
**3400 Klosterneuburg (AT)**

(74) Vertreter: **Graf Glück Kritzenberger**
**Hermann-Köhl-Strasse 2a**
**93049 Regensburg (DE)**

(56) Entgegenhaltungen:
WO-A2-2008/154366     DE-A1- 19 955 125
DE-A1-102006 060 636     DE-A1-102008 044 374
DE-A1-102009 047 359

EP 2 647 988 B1

## Beschreibung

Die Erfindung bezieht sich auf ein Verfahren gemäß Oberbegriff Patentanspruch 1 und auf eine Vorrichtung gemäß Oberbegriff Patentanspruch 13.

Verfahren und Vorrichtungen oder Sensoren zum Messen des Sauerstoffgehalts eines Messgases sind in unterschiedlichen Ausführungen bekannt. Bekannt sind beispielsweise Sauerstoffsensoren, die nach einem Diffusionslimitierenden amperometischen Verfahren arbeiten, aber sich nur bedingt zur Messung bei hoher Luftfeuchtigkeit eignen, da Feuchte über konstruktionsbedingte Diffusionsöffnungen in das Innere des jeweiligen Sauerstoffsensors eindringen und dort zu Problemen führen kann. Insbesondere kann kondensierte Feuchtigkeit bei Wieder-Inbetriebnahme eines solchen Sensors zu dessen Zerstörung führen.

Bekannt sind weiterhin Sauerstoffsensoren, die nach einem potentiometrischen Verfahren (Nernst-Zelle) arbeiten. Diese Sensoren werden vorwiegend zur Messung kleiner Sauerstoffkonzentrationen im Bereich der Abgasüberwachung eingesetzt. Durch die Vermeidung von Diffusionsöffnungen sind diese Sensoren robuster auch gegenüber Feuchtigkeit. Zur Bestimmung des Sauerstoffpartialdruckes oder des Sauerstoffgehaltes wird der Sauerstoffpartialdruck eines Referenzgases oder eines Referenzvolumens mit dem Sauerstoffpartialdruck des Messgases verglichen, und zwar unter Verwendung einer Festelektrolytzelle im einfachsten Fall bestehend aus wenigstens einer ersten Elektrode im Bereich des Referenzgases, aus einer zweiten Elektrode im Bereich des Messgases und wenigstens einem Sauerstoff leitender Festelektrolyten, beispielsweise aus Zirkoniumdioxid (ZirkoniumIV-Oxid) zwischen den Elektroden. Die an den Elektroden anliegende Messspannung bestimmt entsprechend der sogenannten Nernst-Gleichung den Sauerstoffpartialdruckquotienten zwischen dem Referenzgas und dem Messgas. Dieses vereinfachte potentiometrische Messverfahren setzt allerdings voraus, dass der Sauerstoffpartialdruck im Referenzvolumen konstant ist, d.h. die das Referenzgas oder Referenzvolumen aufnehmende Referenzkammer absolut dicht ist, was in der Praxis nicht oder aber allenfalls nur mit einem wirtschaftlich nicht vertretbaren Aufwand erreichbar ist. Um diesen Nachteil zu vermeiden ist es auch üblich, dass der Sauerstoffpartialdruck im Referenzvolumen in periodischen Abständen neu eingestellt wird, und zwar unter Verwendung einer zusätzlichen Festelektrolytzelle, die sich zwischen dem Referenzvolumen und dem Messgas befindet und als reine Pumpzelle betrieben wird. Auch dies bedeutet aber einen zusätzlichen nicht unerheblichen konstruktiven Aufwand. Das Zusammenfassen der Funktionen Pumpen und Messen in einer einzigen Festelektrolytzelle scheitert bisher u.a. daran, dass die an den Elektroden einer solchen Festelektrolytzelle gemessene Spannung zusätzlich auch durch den innerhalb der Festelektrolytzelle vom Pumpstrom erzeugten Spannungsabfall verfälscht wird, der im Wesentlichen vom Innenwiderstand des Festelektrolyten abhängig ist und sich schwer eliminieren lässt, da der Innenwiderstand des Festelektrolyten sich mit dessen Temperatur und Lebensdauer signifikant verändert.

Bekannt ist insbesondere auch ein Verfahren (EP 0 698 209), bei dem versucht wird, die durch den Spannungsabfall des Pumpstromes erzeugte Störgröße dadurch zu eliminieren, dass eine Festelektrolytzelle abwechselnd als Pump- und Messzelle betrieben wird. Bei diesem Wechselbetrieb treten aber Polarisationseffekte auf, die ebenfalls das Messergebnis verfälschen.

Bei einem weiteren bekannten Verfahren (DE 198 00 027) wird vorgeschlagen, diese das Messergebnis verfälschenden Polarisationseffekte durch einen kurzen Stromimpuls mit invertierter Polarität zu reduzieren.

Bekannt ist weiterhin ein Verfahren zur Messung des Anteils einer Gasspezies, nämlich des Anteils an $NO_x$ in einem Messgas (DE 10 2009 047 359 A1). Zur Durchführung dieses Verfahrens wird ein Sensorelement verwendet, welches eine erste, zweite und dritte Festelektrolytanordnung mit jeweils zwei Elektroden und mit jeweils einem die Elektroden verbindenden Festelektrolyten, eine gasdichte Kammer sowie eine erste und eine zweite zusätzliche Kammer aufweist, die über eine interne Diffusionsbarriere miteinander in Verbindung stehen und von denen erste zusätzliche Kammer über eine externe Diffusionsbarriere mit einem das Messgas führenden Messraum in Verbindung steht. Während der Messung wird die erste zwischen der ersten zusätzlichen Kammer und dem Messraum angeordnete Festelektrolytanordnung als Sauerstoff-Pumpzelle so betrieben, dass der Sauerstoff in den Messraum zurückgeführt wird und somit das Messgas, welches über die externe Diffusionsbarriere in die erste zusätzliche Kammer gelangt ist und mit welchem die zweite zusätzliche Kammer über die interne Diffusionsbarriere beaufschlagt wird, keinen oder im Wesentlichen keinen freien Sauerstoff, sondern hauptsächlich nur in Form von $NO_x$ enthält, mehr enthält. In der Messphase (Akkumulationsphase) erfolgt durch Pumpen über die zweite Festelektrolytanordnung, die zwischen der zweiten zusätzlichen Kammer und der gasdichten Kammer angeordnet ist, durch Abspalten von Sauerstoff aus dem $NO_x$ der zweiten zusätzlichen Kammer in der gasdichten Kammer eine Akkumulation einer Sauerstoffmenge, die ein Maß für den Anteil an $NO_x$ in dem Messgas darstellt. Aus einem Potentialverlauf, der an der dritten, zwischen der gasdichten Kammer und einem mit dem Messraum in Verbindung stehenden Kanal angeordneten Festelektrolytanordnung anliegt, wird auf den $NO_x$-Anteil im Messgas geschlossen. Vor der Messung erfolgt in einer der Akkumulationsphase vorausgehenden Phase (Initialisierungsphase) durch Pumpen mit der dritten Festelektrolytanordnung ein Herstellen oder Wiederherstellen eines definierten Ausgangszustandes in der gasdichten Kammer, und zwar durch Leerpumpen dieser Kammer.

Aufgabe der Erfindung ist es ein Verfahren aufzuzeigen, welches es bei einem reduzierten konstruktiven Aufwand ermöglicht, den Sauerstoffpartialdruck und damit auch den Sauerstoffgehalt in einem Messgas mit hoher Genauigkeit zu bestimmen. Zur Lösung dieser Aufgabe ist ein Verfahren entsprechend dem Patentanspruch 1 ausgebildet. Eine Vorrichtung ist Gegenstand des Patentanspruchs 13.

Unter "Messgas" ist im Sinne das zu messende Gas zu verstehen.

"Sauerstoffleitender Festelektrolyt" ist im Sinne der Erfindung ein Elektrolyt, der in einem Pumpbetrieb bei Beaufschlagung mit einem Pumpstrom einen Sauerstofftransport abhängig von einer durch den Pumpstrom erzeugten Ladungsträgermenge erzeugt sowie im Messbetrieb eine dem Sauerstoffpartialdruckquotienten zwischen einem Referenzgas und einem Messgas entsprechende Spannung liefert.

Der Ausdruck "im Wesentlichen" bzw."etwa" bedeutet im Sinne der Erfindung Abweichungen vom jeweils exakten Wert um +/-10%, bevorzugt um +/- 5% und/oder Abweichungen in Form von für die Funktion unbedeutenden Änderungen.

In Weiterbildung ist das erfindungsgemäße Verfahren beispielsweise auch so ausgeführt,

dass der Sauerstoffpartialdruck in der ersten Phase auf einen Wert deutlich kleiner als 1 % des Sauerstoffpartialdruckes des Messgases reduziert wird,

und/oder

dass die erste Phase dann beendet wird, wenn die an den Elektroden anliegende Spannung in dieser Phase einen vorgegebenen Spannungsschwellwert überschreitet,

und/oder

dass der Spannungsschwellwert sich aus einer beispielsweise variablen Komponente, die durch einen Spannungsabfall des Pumpstromes erzeugt ist, und aus einer Komponente zusammensetzt, die aus dem Sauerstoffpartialdruckquotienten resultiert, und dass der aus dem Pumpstrom resultierende Spannungsabfall innerhalb der ersten Phase zu einem Zeitpunkt ermittelt wird, an dem die an den Elektroden anliegende Spannung nur oder im Wesentlichen nur durch den Spannungsabfall des Pumpstromes bestimmt ist,

und/oder

dass nach Beendigung der ersten Phase das Referenzvolumen in einer zweiten Phase durch die im Pumpbetrieb betriebene Festelektrolytzelle durch Füllen auf einen definierten Sauerstoffpartialdruck gebracht wird, der in der Größenordnung des zu messenden Sauerstoffpartialdruckes liegt, und dass hierfür über den Pumpstrom eine Ladungsträgermenge transportiert wird, die proportional zum einzustellenden Sauerstoffpartialdruck im Referenzvolumen ist,

und/oder

dass zum Einstellen eines definierten Sauerstoffpartialdruckes im Referenzvolumen während der zweiten Phase die Festelektrolytzelle mit wenigsten einem Pumpstromimpuls beaufschlagt wird, und dass die Dauer des wenigstens einen Pumpstromimpulses so gewählt ist, dass das Strom-Zeit-Integral aus der Amplitude des Pumpstromimpulses und der Impulsdauer der Ladungsträgermenge entspricht und proportional zu dem im Referenzvolumen einzustellenden Sauerstoffpartialdruck ist,

und/oder

dass nach Ablauf der zweiten Phase und vorzugsweise nach Ablauf einer auf die zweite Phase folgenden und als Abklingphase dienenden dritten Phase aus der in einer Messphase anliegenden Messspannung der Sauerstoffpartialdruck des Messgases ermittelt wird, und/oder

dass der zumindest die erste Phase, die zweite Phase und die Messphase aufweisende Messzyklus periodisch wiederholt wird,

und/oder

dass der Pumpstrom (Ip) und/oder die Dauer des Pumpstromes (Ip) in der zweiten Phase so geändert und/oder eingestellt werden, dass die in der Messphase gemessene Messspannung einen vorgegebenen konstanten oder im Wesentlichen konstanten Spannungswert aufweist, und dass aus dem Strom-Zeit-Integral der Amplitude des Pumpstromes und der Dauer des Pumpstromes in der zweiten Phase (Phase II) der Sauerstoffpartialdruck des Messgases bestimmt wird,

und/oder

dass der Pumpstrom (Ip) in der zweiten Phase hinsichtlich Amplitude und Verlauf konstant ist, dass zur Erzielung des vorgegebenen, konstanten Spannungswertes in der Messphase, beispielsweise der Spannung Null die Zeitdauer des Pumpstromes in der zweiten Phase eingestellt und/oder geregelt wird, und dass aus der Zeitdauer des Pumpstromes der Sauerstoffpartialdruck des Messgases ermittelt wird,

und/oder

dass bei bekanntem Umgebungsdruck die Sauerstoffkonzentration aus dem jeweiligen Sauerstoffpartialdruck ermittelt wird,

und/oder

dass über eine Referenzmessung mit einem bekannten Sauerstoffpartialdruck des Messgases auf den Sauerstoffpartialdruck des Referenzvolumens geschlossen wird,

und/oder

dass zum Einstellen eines Innenwiderstandes der Festelektrolytzelle, der eine Funktion der Temperatur der Festelektrolytzelle oder des Festelektrolyten bzw. proportional zu der Temperatur der Festelektrolytzelle oder des Festelektrolyten ist, in einem Widerstandseinstell-Verfahren ein die erste, zweite und dritte Phase enthaltende Abfolge mehrfach wiederholt wird,

und/oder

dass im Anschluss an das jeweilige Widerstandseinstell-Verfahren der Innenwiderstandes der Festelektrolytzelle ermittelt und mit diesem Widerstand die Zelltemperatur der Festelektrolytzelle bestimmt oder in Abhängigkeit von diesem Widerstand die Zelltemperatur der Festelektrolytzelle gesteuert oder geregelt wird,

und/oder

dass der Sauerstoffpartialdruck im Referenzvolumen in Abhängigkeit von dem bei der Messung zu erwartenden Sauerstoffpartialdruck im Messgas eingestellt wird, vorzugsweise derart, dass Verhältnis "Sauerstoffpartialdruck im Messgas/ Sauerstoffpartialdruck im Referenzvolumen" 2,7 oder etwa 2,7, beispielsweise 2,718 beträgt,

wobei die vorstehenden Verfahrensschritte jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1 in einer vereinfachten Funktionsdarstellung eine Vorrichtung zur Bestimmung des Sauerstoffgehaltes eines Messgases entsprechend einer Ausführungsform der Erfindung;

Fig. 2 u. 3 jeweils ein Spannungs- und Zeitdiagramm der Messspannung bei zwei unterschiedlichen Verfahren gemäß der Erfindung;

Fig. 4 in einem Diagramm die Abhängigkeit des Sauerstoffpartialdrucks bzw. des Sauerstoffgehalts von der Fülldauer oder -zeit.

Die in den Figuren allgemein mit 1 bezeichnete Vorrichtung (Sensor) zur Bestimmung des Sauerstoffpartialdruckes bzw. des Sauerstoffgehaltes eines Messgases in einem Messgasvolumen oder in einer Messgasumgebung besteht bei der dargestellten Ausführungsform im Wesentlichen aus einem sauerstoffleitenden Festelektrolyten 2, z.B. aus Zirconiumdioxid. Der bei der dargestellten Ausführungsform substratartige oder plattenartige Festelektrolyt 2 ist an einer Oberflächenseite mit einer Referenzelektrode 3.1 und an seiner anderen, gegenüberliegenden Oberflächenseite mit einer Messelektrode 3.2 versehen. Von diesen Elektroden, die zusammen mit dem Festelektrolyten 2 eine Festelektrolytzelle 4 bilden, befindet sich die Referenzelektrode 3.1 in einer ein Referenzvolumen aufnehmenden Referenzkammer 5, die durch eine Abdeckung 6 möglichte dicht verschlossen ist. Die Messelektrode 3.2 befindet sich in der das Messgas führenden Messgasumgebung oder in einem das Messgas führenden Raum.

Zum Erhitzen des Feststoffelektrolyten 2 auf eine konstante oder im Wesentliche konstante Betriebstemperatur dient eine elektrische Heizung 7, die ausreichend nahe an dem Feststoffelektrolyten 2 angeordnet ist, d.h. bei der dargestellten Ausführung an der Außenseite der Abdeckung 6, dem Feststoffelektrolyten 2 gegenüberliegend. Zur Konstanthaltung der Temperatur ist die Heizung 7 in einem geregelten Heizstromkreis angeordnet, der u.a. eine Messeinrichtung 8 zur Messung des Heizstromes und eine Spannungsquelle 9 zur Erzeugung der Heizspannung $U_{heiz}$ aufweist. Der mit der Messeinrichtung 8 gemessene Heizstrom ist proportional zur Temperatur der Heizung 7. Die von der Spannungsquelle 9 abgegebene Heizspannung $U_{heiz}$ wird durch eine Steuer- und Kontrolleinheit 10 in Abhängigkeit von dem Heizstrom bzw. von dem Messsignal der Messeinrichtung 8 (als Istwert) und einem in der Steuer- und Kontrolleinheit 10 abgelegten Sollwert gesteuert, sodass die angestrebte konstante oder im Wesentlichen konstante Temperatur der Heizung 7 und damit Betriebs- oder Zellentemperatur für den Festelektrolyten 2 und der Festelektrolytzelle 4 erreicht ist.

Die Referenzelektrode 3.1 und die Messelektrode 3.2 sind ständig mit einer hochohmigen Messeinrichtung 11 (hochohmiges Voltmeter) zur Messung der zwischen diesen Elektroden bzw. zwischen den beiden Oberflächenseiten des Festelektrolyten 2 anliegenden Messspannung UM verbunden. Die Messeinrichtung 11 liefert ein der gemessenen Messspannung UM entsprechendes Signal an die Steuer- und Kontrolleinheit 10.

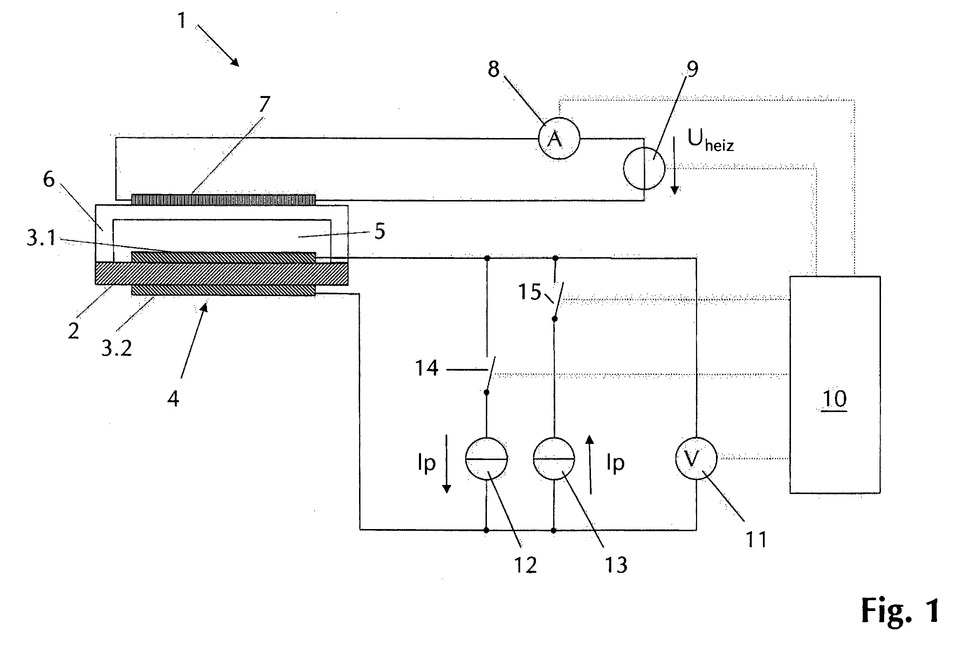

Mit 12 und 13 sind in der Figur 1 zwei Stromquellen bezeichnet, von denen die Stromquelle 12 in Serie mit einem steuerbaren Schalter 14 zwischen der Referenzelektrode 3.1 und der Messelektrode 3.2 und die Stromquelle 13 in Serie mit einem steuerbaren Schalter 15 ebenfalls zwischen der Referenzelektrode 3.1 und der Messelektrode 3.2 angeordnet sind. Die Stromquelle 12 ist so ausgebildet, dass sie bei geschlossenem Schalter 14 einen Stromfluss oder Pumpstrom Ip durch den Festelektrolyten 2 von der Messelektrode 3.2 an die Referenzelektrode 3.1 erzeugt, und zwar für einen Pumpbetrieb der Festelektrolytzelle 4 zum Entleeren der Referenzkammer 5, d.h. zum Reduzieren des Sauerstoffpartialdruckes oder des Sauerstoffgehalts in der Referenzkammer 5 bzw. in dem dortigen Referenzvolumen auf einen Wert, der signifikant unter dem Sauerstoffpartialdruck oder des Sauerstoffgehalt des Messgases liegt und beispielsweise kleiner als 10% des Sauerstoffpartialdruck oder des Sauerstoffgehalt des Messgases oder Null oder im Wesentlichen auf Null beträgt (nachstehend kurz "Entleeren der Referenzkammer 5").

Die Stromquelle 13 ist so ausgebildet, dass sie bei geschlossenem Schalter 15 einen Stromfluss oder Pumpstrom Ip durch den Festelektrolyten 2 von der Referenzelektrode 3.1 an die Messelektrode 3.3 erzeugt, und zwar für einen Pumpbetrieb der Festelektrolytzelle 4 zum Füllen der Referenzkammer 5, d.h. zur Einstellung eines Referenz-Sauerstoffpartialdruckes oder -gehaltes in der Referenzkammer 5 (nachstehend kurz "Füllen der Referenzkammer 5").

Die Ruhestellung der Schalter 14 und 15 ist ihr offener Zustand. Die Schalter 14 und 15 werden ebenfalls von der Steuer- und Kontrolleinheit 10 in der nachstehend noch näher beschriebenen Weise gesteuert und sind hierfür beispielsweise Relais oder elektronische Bauelemente, z.B. Transistoren.

Aufgrund des elektrischen Innenwiderstandes der Festelektrolytzelle 4 bzw. des Festelektrolyten 2 beim Pumpbetrieb sowie durch Polarisationseffekte beim Wechsel zwischen dem Pumpbetrieb und einem Betrieb der Festelektrolytzelle 4 als Messzelle (Messbetrieb) ist ein potentiometrischer Messbetrieb, d.h. eine Bestimmung der Sauerstoffkonzentration oder des Sauerstoffgehaltes im Messgas durch Messung und Auswertung der Messspannung UM nur bei entsprechender Ausbildung des Messverfahrens möglich.

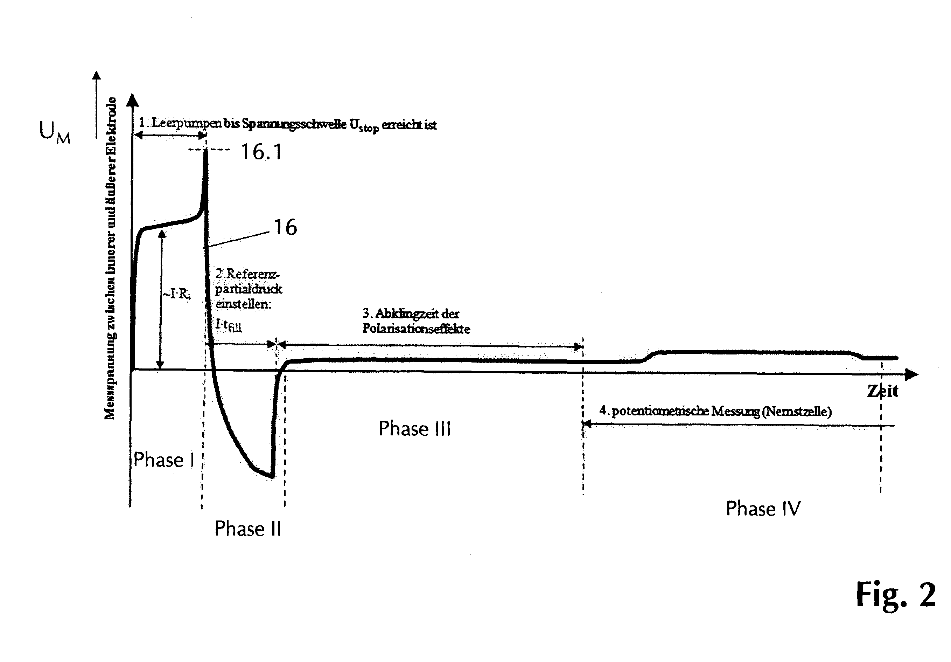

Ein solches Messverfahren bzw. der zeitliche Verlauf 16 der Messspannung UM bei diesen Verfahren ist in der Figur 2 dargestellt. Um die Vorrichtung 1 zur potentiometrischen Messung des absoluten Sauerstoffpartialdrucks bzw. Sauerstoffgehaltes im Messgas verwenden zu können, ist es erforderlich, den Sauerstoffpartialdruck bzw. den Sauerstoffgehalt in der Referenzkammer 5 bzw. in dem dortigen Referenzvolumen auf einen definierten Referenzwert zu bringen. Hierfür wird in einem ersten Schritt oder in einer ersten Phase I des Messzyklus die Festelektrolytzelle 4 bei geöffnetem Schalter 15 durch Schließen des Schalters 14 als Pumpzelle zu Entleeren der Referenzkammer 5 betrieben. Hierbei wird der Verlauf der Messspannung UM überwacht. Die Messspannung UM setzt sich dabei im Wesentlichen aus einer elektromotorischen Kraft, hervorgerufen durch den Sauerstoffpartialdruckquotienten aus den Sauerstoffpartialdrücken des Messgases und des Referenzgases, sowie aus einem Spannungsabfall zusammen, der durch den Pumpstrom Ip am Innenwiderstand der Festelektrolytzelle 4 erzeugt wird. Dieser Innenwiderstand ist u.a. im Wesentlichen von der Betriebstemperatur des Feststoffelektrolyten 2 abhängig, aber auch von der Alterung des Festelektrolyten 2. Kleine aus der elektromotorischen Kraft resultierende Komponenten der Spannung UM sind am Beginn der Phase I vielfach kaum messbar und gehen in dem durch den Innenwiderstand der Festelektrolytzelle 4 erzeugten Spannungsabfall unter. Allerdings steigen die durch die elektromotorische Kraft erzeugte Komponente der Spannung UM und damit auch diese Spannung selbst im Verlauf der Phase I signifikant an, wenn der Sauerstoffpartialdruck bzw. Sauerstoffgehalt des Referenzvolumens in der Referenzkammer 5 gegen Null strebt, und übersteigt dann deutlich des Einfluss des durch den Pumpstrom Ip am Innenwiderstand der Festelektrolytzelle 4 erzeugten Spannungsabfall, wie dies in der Figur 2 bei 16.1 angedeutet ist. Hierdurch ist das Ende des Entleerens der Referenzkammer 5 bzw. der Phase I eindeutig detektierbar, d.h. der Zeitpunkt des Endes der Phase I kann durch Überschreiten einer vorgegebenen Spannungsschwelle eindeutig und einfach definiert werden. Um den Einfluss des Pumpstromes Ip dabei weiter zu reduzieren, kann die entsprechende Spannungsschwelle relativ zum typischen, durch den Pumpstrom Ip erzeugten Spannungsabfall definiert werden. Dieser typische, vom Pumpstrom Ip erzeugte Spannungsabfall lässt sich beispielsweise während der Phase I zu einem Zeitpunkt ermitteln, an dem die durch die elektromotorische Kraft bedingte Spannungskomponente noch keinen signifikanten Beitrag zu der Spannung UM liefert.

Nach Beendigung des Entleerens der Referenzkammer 5 wird in der Phase II der Schalter 14 geöffnet und der Schalter 15 geschlossen, sodass nunmehr der von der Stromquelle 13 erzeugte Pumpstrom Ip in umgekehrter Richtung die Festelektrolytzelle 4 bzw. den Festelektrolyten 2 durchströmt und hierbei Sauerstoff von Außen in die Referenzkammer 5 zum Füllen der der Referenzkammer 5 gepumpt wird. Die transportierte Sauerstoffmenge ist dabei proportional zur transportierten Ladungsmenge des Pumpstromes durch den Festelektrolyten 2. Durch einen Pumpstromimpuls mit definiertem Strom-Zeit-Integral Ixtfill kann somit der Sauerstoffpartialdruck oder Sauerstoffgehalt des Referenzvolumens auf einen definierten Wert gebracht werden. Der Zusammenhang zwischen dem Strom-Zeit-Integral des Pumpstromimpulses und dem mit dem Pumpstromimpuls eingestellten Sauerstoffpartialdruck im Referenzvolumen ergibt sich im Wesentlichen aus dem Volumen der Referenzkammer 5 und kann durch Kalibrierung bestimmt werden.

Nach dem Einbringen der definierten Sauerstoffmenge in die Referenzkammer 5 wird auch der Schalter 15 wieder geöffnet. Die Festelektrolytzelle 4 wird dann als reine Messzelle betrieben. Nach Ablauf der auf die Phase II folgenden Phase III, d.h. nach einem Abklingen der Polarisationseffekte, die durch den Wechsel zwischen dem Entleeren und Füllen der Referenzkammer 5 bedingt sind, kann dann in der Phase IV aus der Messspannung UM unter Berücksichtigung des eingestellten und aus dem Strom-Zeit-Integral des Pumpstromimpulses beim Füllen bekannten Sauerstoffpartialdruckes in der Referenzkammer 5 über die Nernstgleichung auf den Sauerstoffpartialdruck des Messgases an die Elektrode 3.2 geschlossen werden.

Das vorgeschriebene Verfahren mit den vier Phasen I - IV des Messzyklus setzt voraus, dass die Referenzkammer 5 hinreichend dicht ausgebildet ist, sodass der Sauerstoffpartialdruck in dieser Referenzkammer 5 über eine längere Zeit konstant bleibt. In der Praxis wird aber eine periodische Wiederholung des Messzyklus mit den Phasen I - IV erforderlich sein.

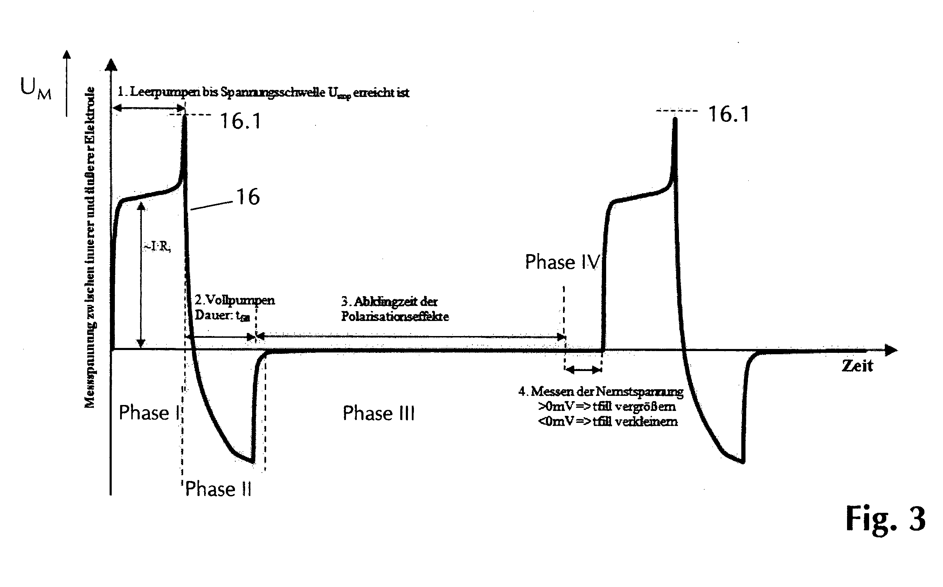

Figur 3 zeigt den Spannungs-Zeitverlauf 16 der Spannung UM bei einem weiteren Verfahren, welches auch als dynamisch ampere-potentiometrisches Messverfahren bezeichnet werden kann. Bei diesem Verfahren erfolgt eine ständige Wiederholung der Phasen I - IV, d.h. ein periodisches Entleeren und Füllen der Referenzkammer 5 über die als Pumpzelle betriebene Festelektrolytzelle 4 (Phasen I und II) mit anschließender Abklingphase (Phase III) und Messphase (Phase IV). In der Phase I erfolgt bei geschlossenem Schalter 14 das Entleeren der Referenzkammer 5 in gleicher Weise, wie dies für die Phase I bei dem Verfahren der Figur 2 beschrieben wurde. In der Phase II erfolgt bei geschlossenem Schalter 15 das Füllen der Referenzkammer 5 durch den Pumpstrom Ip der Stromquelle 13. Der Schalter 15 wird hierfür für eine vorgegebene Zeitdauer $t_{fill}$ geschlossen und anschließend wieder geöffnet. Im Anschluss daran erfolgt in der Phase III das Abklingen der Polarisationseffekte und in der anschließenden Phase IV die Messung der Spannung UM, d.h. der Nernstspannung, die dem Quotienten aus dem Sauerstoffpartialdruck in der Referenzkammer 5 und dem Sauerstoffpartialdruck in dem Messgas entspricht.

Die Besonderheit dieses dynamischen ampere-potentiometrischen Messverfahrens besteht darin, dass im Laufe des Verfahrens die Zeit $t_{fill}$ bzw. die Schließzeit des Schalters 15 durch die Steuer- und Kontrolleinheit 10 in Abhängigkeit von der in der Phase IV gemessenen Spannung UM derart nachgeregelt wird, dass schließlich die in dieser Phase IV gemessene Spannung UM einen vorgegebenen Wert, beispielsweise den Wert Null aufweist.

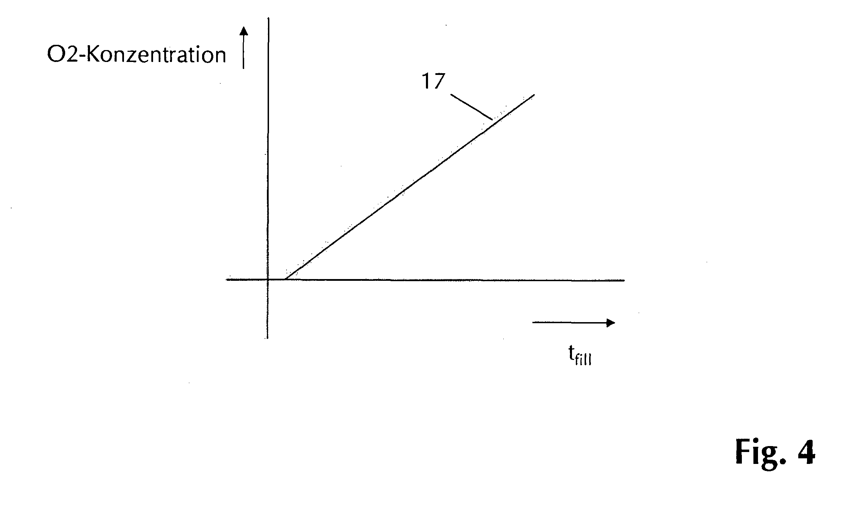

Wird die Zeit $t_{fill}$ z.B. so geregelt, dass die Spannung UM in der Phase IV gleich Null ist, so ist der Sauerstoffpartialdruck oder Sauerstoffgehalt des Referenzvolumens in der Referenzkammer 5 gleich dem Sauerstoffpartialdruck oder der Sauerstoffkonzentration des Messgases, d.h. bei einem vorgegebenem und konstanten Pumpstrom Ip während der Phase II ist die Zeit $t_{fill}$ unmittelbar proportional zu dem Sauerstoffpartialdruck bzw. zu der Sauerstoffkonzentration im Messgas, wie dies in der Figur 4 mit der Kurve 17 dargestellt ist. Nach einer entsprechenden Kalibrierung kann daher die Zeit $t_{fill}$ unmittelbar als Messwert für den Sauerstoffpartialdruck im Messgas und bei bekanntem Druck des Messgases als Messwert für den Sauerstoffgehalt verwendet werden kann.

Eine das Verfahren beeinträchtigende Veränderung des Innenwiderstands der Festelektrolytzelle 4 über die Lebensdauer kann durch ein Verfahren reduziert werden, welches als Konditionierungsverfahren oder "burn-in"-Verfahren bezeichnet werden kann und aus einer schnellen Abfolge von Phase I-III ohne Verweilen in der potentiometrischen Phase (IV) besteht. Mit einer derart reduzierten Veränderung des Innenwiderstandes, ist der Innenwiderstand der Festelektrolytzelle 4 dann hauptsächlich durch ihre Zellentemperatur bestimmt und kann als Regelgröße für diese Temperatur verwendet werden. Vorteilhaft ist es die Beheizung der Festelektrolytzelle 4 so zu regeln, dass die Zellentemperatur konstant bleibt, dadurch können Temperaturabhängigkeiten des Verfahrens reduziert werden.

Die Temperaturabhängigkeit des Verfahrens kann auch mit einer weiteren Methode reduziert werden:

Über die Nernst-Gleichung ergibt sich ein positiver Temperaturkoeffizient für die resultierende potentiometrische Zellen- bzw. Messspannung. Bei ansteigender Zellentemperatur ergibt sich jedoch über die allgemeine Gasgleichung auch ein Anstieg des Sauerstoffpartialdrucks im Referenzvolumen, dies führt aber zu einem negativen Temperaturkoeffizienten. Das Verhältnis von Sauerstoffpartialdruck im Messgas zu dem Sauerstoffpartialdrucks im Referenzvolumen ist entscheidend dafür, ob die Überlagerung dieser zwei Temperatureinflüsse zu einem positivem oder einem negativen Gesamt-Temperatur-Koeffizienten führt. Sind die bei einer Anwendung bzw. Messung typischen Sauerstoffpartialdrücke im Messgas oder der Bereich bekannt, in dem bei einer Anwendung oder Messung die Sauerstoffpartialdrücke im Messgas typischerweise liegen, so lässt sich durch günstige Wahl des Sauerstoffpartialdrucks im Referenzvolumen der Temperatureinfluss stark reduzieren.

Die Temperaturabhängigkeit ergibt sich einerseits aus der Nernstgleichung:

$$Un(T_{sens}, p_{O2Messgas}) = \frac{RT_{sens}}{zF} \ln(\frac{p_{O2Messgas}}{p_{O2Ref}})$$

| | |
|---|---|
| Gaskonstante | $R = 8{,}314\ J\ mol^{-1}\ K^{-1}$ |
| Faradaykonstante | $F = 96485\ C\ mol^{-1}$ |
| Äquivalenzahl | $z = 4$ |
| Sensortemperatur | $T_{sens}$ in °K |
| Messgas | $p_{O2Messgas}$ in bar |
| Referenzgas | $p_{O2Ref}$ in bar |

Andererseits ist auch der Referenzpartialdruck $p_{O2Ref}$ temperaturabhängig, bei konstantem Volumen der Referenzkammer ergibt sich folgender Zusammenhang:

$$p_{O2Ref}(T_{sens}) = p_{O2Ref0}\ \frac{T_{sens}}{T_{sens0}}$$

$p_{O2Ref0}$ ist dabei der Referenzpartialdruck der bei Temperatur $T_{sens0}$ eingestellt wurde. Aus der Kombination ergibt sich:

$$Un(T_{sens}, p_{O2Messgas}) = \frac{RT_{sens}}{4F} \ln\left(\frac{p_{O2Messgas}}{p_{O2Ref0}} \cdot \frac{T_{sens0}}{T_{sens}}\right) = \frac{RT_{sens0}}{4F} \frac{T_{sens}}{T_{sens0}} \ln\left(\frac{p_{O2Messgas}}{p_{O2Ref0}} \cdot \frac{T_{sens0}}{T_{sens}}\right)$$

Reihenentwicklung um $T_{sens}/T_{sens0} = 1$:

$$Un(T_{sens}, p_{O2Messgas}) = \frac{RT_{sens0}}{4F}\left(\ln\left(\frac{p_{O2Messgas}}{p_{O2Ref0}}\right) + \left(\frac{T_{sens}}{T_{sens0}} - 1\right)\underbrace{\left(\ln\left(\frac{p_{O2Messgas}}{p_{O2Ref0}}\right) - 1\right)}_{} + \ldots\right)$$

= 0 zur Reduzierung der

=>optimales Verhältnis: $\dfrac{p_{O2Messgas}}{p_{O2Ref0}} = e \approx 2{,}718$

Es ist also zumindest vorteilhaft, bei ungefährer Kenntnis des bei einer Messung zu erwartenden Sauerstoffpartialdrücke im Messgas, den Sauerstoffpartialdruck im Referenzvolumen so zu wählen oder einzustellen, dass sich das vorstehende Verhältnis "Sauerstoffpartialdrücke im Messgas/ Sauerstoffpartialdruck im Referenzvolumen" von 2,718 zumindest in etwa ergibt.

**Bezugszeichenliste**

| | |
|---|---|
| 1 | Vorrichtung zur Bestimmung des Sauerstoffgehaltes in einem Messgas |
| 2 | Festelektrolyt |
| 3.1 | Referenzelektrode |
| 3.2 | Messelektrode |
| 4 | Zelle |
| 5 | Referenzkammer |
| 6 | Abdeckung |
| 7 | elektrische Heizung |
| 8 | Strommesseinrichtung |
| 9 | Heizspannungsquelle |
| 10 | Steuer- und Kontrolleinheit |
| 11 | Spannungsmesser |
| 12, 13 | Stromquelle |
| 14, 15 | Schalter |
| 16 | zeitlicher Verlauf der Messspannung |
| 16.1 | Spannungsmaximum am Ende der Entleerungsphase |
| 17 | Verlauf des Sauerstoffpartialdruckes in Abhängigkeit von der Füllzeit |
| | |
| UM | Messspannung gemessen zwischen den Elektroden 3.1 und 3.2 |
| $t_{fill}$ | Füllzeit |

**Patentansprüche**

1. Verfahren zur Messung des Sauerstoffpartialdruckes oder des Sauerstoffgehalts in einem Messgas in wenigstens einem Messzyklus unter Verwendung Festelektrolytzelle (4) mit wenigstens einem Sauerstoff leitenden Festelektrolyten (2) und mit wenigstens einer Referenzelektrode (3.1) sowie wenigstens einer Messelektrode (3.2), wobei die wenigstens eine Messelektrode (3.2) mit dem Messgas in Verbindung steht und die wenigstens eine Referenzelektrode (3.1) mit einem vom Messgas getrennten Referenzgas oder Referenzvolumen in Verbindung steht, wobei der Festelektrolytzelle (4) für einen Pumpbetrieb ein Strom über die Elektroden aufgeprägt und eine Messspannung ($U_M$) an den Elektroden (3.1, 3.2) abgegriffen wird,
**dadurch gekennzeichnet,**
**dass** in einer ersten Phase (Phase I) des Messzyklus der Sauerstoffpartialdruck des Referenzvolumens über die im Pumpbetrieb betriebene Festelektrolytzelle (4) solange reduziert wird, bis er niedriger ist als der Sauerstoffpartialdruck des Messgases, so dass die in einer Messphase (Phase IV) für die Bestimmung des Sauerstoffpartialdruckes oder des Sauerstoffgehalts des Messgases genutzte Messspannung ($U_M$) nur oder im Wesentlichen nur durch den Sauerstoffpartialdruckquotienten zwischen dem Sauerstoffpartialdruck des Messgases und des Referenzgases bestimmt ist.

2. Verfahren nach Anspruch 1, **dadurch gekennzeichnet, dass** der Sauerstoffpartialdruck in der ersten Phase auf einen Wert deutlich kleiner als 1 % des Sauerstoffpartialdruckes des Messgases reduziert wird.

3. Verfahren nach Anspruch 1 oder 2, **dadurch gekennzeichnet, dass** die erste Phase dann beendet wird, wenn die an den Elektroden (3.1, 3.2) anliegende Spannung (UM) in dieser Phase einen vorgegebenen Spannungsschwellwert (16.1) überschreitet.

4. Verfahren nach Anspruch 3, **dadurch gekennzeichnet, dass** der Spannungsschwellwert (16.1) sich aus einer Komponente, die durch einen Spannungsabfall des Pumpstromes (Ip) erzeugt ist, und aus einer Komponente zusammensetzt, die aus dem Sauerstoffpartialdruckquotienten resultiert, und dass der aus dem Pumpstrom (Ip) resultierende Spannungsabfall innerhalb der ersten Phase (Phase I) zu einem Zeitpunkt ermittelt wird, an dem die an den Elektroden (3.1, 3.2) anliegende Spannung ($U_M$) nur oder im Wesentlichen nur durch den Spannungsabfall des Pumpstromes bestimmt ist.

5. Verfahren nach einem der vorhergehenden Ansprüche, **dadurch gekennzeichnet, dass** nach Beendigung der ersten Phase das Referenzvolumen in einer zweiten Phase (Phase II) durch die im Pumpbetrieb betriebene Festelektrolytzelle (4) durch Füllen auf einen definierten Sauerstoffpartialdruck gebracht wird, der in der Größenordnung des zu messenden Sauerstoffpartialdruckes liegt, und dass hierfür über den Pumpstrom eine Ladungsträgermenge transportiert wird, die proportional zum einzustellenden Sauerstoffpartialdruck im Referenzvolumen ist.

6. Verfahren nach Anspruch 5, **dadurch gekennzeichnet, dass** zum Einstellen eines definierten Sauerstoffpartialdruckes im Referenzvolumen während der zweiten Phase (Phase II) die Festelektrolytzelle (4) mit wenigsten einem Pumpstromimpuls beaufschlagt wird, und dass die Dauer des wenigstens einen Pumpstromimpulses so gewählt ist, dass das Strom-Zeit-Integral aus der Amplitude des Pumpstromimpulses und der Impulsdauer der Ladungsträgermenge entspricht und proportional zu dem im Referenzvolumen einzustellenden Sauerstoffpartialdruck ist.

7. Verfahren nach Anspruch 5 oder 6, **dadurch gekennzeichnet, dass** nach Ablauf der zweiten Phase und vorzugsweise nach Ablauf einer auf die zweite Phase folgenden und als Abklingphase dienenden dritten Phase (Phase III) aus der in einer Messphase (Phase IV) anliegenden Messspannung ($U_M$) der Sauerstoffpartialdruck des Messgases ermittelt wird.

8. Verfahren nach einem der vorhergehenden Ansprüche, **dadurch gekennzeichnet, dass** der zumindest die erste Phase (Phase I), die zweite Phase (Phase II) und die Messphase (Phase IV) aufweisende Messzyklus periodisch wiederholt wird.

9. Verfahren nach Anspruch 8, **dadurch gekennzeichnet, dass** der Pumpstrom (Ip) und/oder die Dauer des Pumpstromes (Ip) in der zweiten Phase (Phase II)so geändert und/oder eingestellt werden, dass die in der Messphase (Phase IV) gemessene Messspannung (UM) einen vorgegebenen konstanten oder im Wesentlichen konstanten Spannungswert aufweist, und dass aus dem Strom-Zeit-Integral der Amplitude des Pumpstromes und der Dauer ($t_{fill}$) des Pumpstromes (Ip) in der zweiten Phase (Phase II) der Sauerstoffpartialdruck des Messgases bestimmt wird.

10. Verfahren nach Anspruch 9, **dadurch gekennzeichnet, dass** der Pumpstrom (Ip) in der zweiten Phase (Phase II) hinsichtlich Amplitude und Verlauf konstant ist, dass zur Erzielung des vorgegebenen, konstanten Spannungswertes in der Messphase (Phase IV), beispielsweise der Spannung Null die Zeitdauer ($t_{fill}$) des Pumpstromes (Ip) in der zweiten Phase (Phase II) eingestellt und/oder geregelt wird, und dass aus der Zeitdauer ($t_{fill}$) des Pumpstromes (Ip) der Sauerstoffpartialdruck des Messgases ermittelt wird.

**11.** Verfahren nach einem der vorhergehenden Ansprüche, **dadurch gekennzeichnet, dass** bei bekanntem Umgebungsdruck die Sauerstoffkonzentration aus dem jeweiligen Sauerstoffpartialdruck ermittelt wird.

**12.** Verfahren nach einem der vorhergehenden Ansprüche, **dadurch gekennzeichnet, dass** über eine Referenzmessung mit einem bekannten Sauerstoffpartialdruck des Messgases auf den Sauerstoffpartialdruck des Referenzvolumens geschlossen wird.

**13.** Verfahren nach einem der vorhergehenden Ansprüche, **dadurch gekennzeichnet, dass** zur Einstellung eines Innenwiderstandes der Festelektrolytzelle (4), der eine Funktion der Temperatur der Festelektrolytzelle (4) oder des Festelektrolyten (2) ist, in einem Widerstands-Einstellverfahren ein die erste, zweite und dritte Phase (I, II, II) enthaltende Abfolge mehrfach wiederholt wird.

**14.** Verfahren nach Anspruch 13, **dadurch gekennzeichnet, dass** im Anschluss an das jeweilige Konditionierungsverfahren Innenwiderstandes der Festelektrolytzelle (4) ermittelt und mit diesem Widerstand die Zelltemperatur der Festelektrolytzelle (4) bestimmt oder in Abhängigkeit von diesem Widerstand die Zelltemperatur der Festelektrolytzelle (4) gesteuert oder geregelt wird.

**15.** Verfahren nach einem der vorhergehenden Ansprüche, **dadurch gekennzeichnet, dass** der Sauerstoffpartialdruck im Referenzvolumen in Abhängigkeit von dem bei der Messung zu erwartenden Sauerstoffpartialdruck im Messgas eingestellt wird, vorzugsweise derart, dass Verhältnis "Sauerstoffpartialdruck im Messgas/ Sauerstoffpartialdruck im Referenzvolumen" 2,7 oder etwa 2,7, beispielsweise 2,718 beträgt.

**16.** Vorrichtung zur Messung des Sauerstoffpartialdruckes oder des Sauerstoffgehalts in einem Messgas in wenigstens einem Messzyklus unter Verwendung Festelektrolytzelle (4) mit wenigstens einem Sauerstoff leitenden Festelektrolyten (2) und mit wenigstens einer Referenzelektrode (3.1) sowie wenigstens einer Messelektrode (3.2), wobei die wenigstens eine Messelektrode (3.2) mit dem Messgas in Verbindung steht und die wenigstens eine Referenzelektrode (3.1) mit einem vom Messgas getrennten Referenzgas oder Referenzvolumen in Verbindung steht, wobei der Festelektrolytzelle (4) für einen Pumpbetrieb ein Strom über die Elektroden aufgeprägt und eine Messspannung ($U_M$) an den Elektroden (3.1, 3.2) abgegriffen wird, sowie mit einer das Messverfahren steuernden Steuer- und Kontrolleinheit (10),
**dadurch gekennzeichnet,**
**dass** die Steuer- und Kontrolleinheit (10) für die Durchführung des Messverfahrens nach einem der vorhergehenden Ansprüche ausgebildet ist.

## Claims

**1.** A method for measuring the oxygen partial pressure or the oxygen content in a gas to be measured in at least one measurement cycle using a solid electrolyte cell (4) with at least one oxygen-conducting solid electrolyte (2) and with at least one reference electrode (3.1) and at least one measuring electrode (3.2), wherein the at least one measuring electrode (3.2) is connected with the gas to be measured and the at least one reference electrode (3.1) is connected with a reference gas or reference volume, separated from the gas to be measured, wherein for a pumping operation a current is imposed on the solid electrolyte cell (4) via the electrodes, and a measured voltage ($U_M$) is tapped off from the electrodes (3.1, 3.2),
**characterised in that**,
in a first phase (Phase I) of the measurement cycle the oxygen partial pressure of the reference volume is reduced via the solid electrolyte cell (4) driven in the pumping operation until it is lower than the oxygen partial pressure of the gas to be measured, so that the measured voltage ($U_M$) used in a measurement phase (Phase IV) to determine the oxygen partial pressure or the oxygen content of the gas to be measured is defined only or essentially only, by the oxygen partial pressure quotient from the oxygen partial pressure of the gas to be measured and that of the reference gas.

**2.** The method according to claim 1, **characterised in that** the oxygen partial pressure in the first phase is reduced to a value that is significantly less than 1% of the oxygen partial pressure of the gas to be measured.

**3.** The method according to claim 1 or 2, **characterised in that** the first phase is then terminated if the voltage ($U_M$) present on the electrodes (3.1, 3.2) in this phase exceeds a prescribed voltage threshold value (16.1).

**4.** The method according to claim 3, **characterised in that** the voltage threshold value (16.1) is made up from a component generated by a voltage drop of the pumping current ($I_p$), and a component resulting from the oxygen partial pressure quotient, and **in that** the voltage drop resulting from the pumping current ($I_p$) within the first phase (Phase I) is determined at a point in time at which the voltage ($U_M$) present on the electrodes (3.1, 3.2) is defined only, or essentially only, by the voltage drop of the pumping current.

**5.** The method according to one of the preceding claims, **characterised in that** after termination of the first phase the reference volume in a second phase (Phase II), by means of the solid electrolyte cell (4) driven in the pumping operation, is brought up as a result of filling to a defined oxygen partial pressure, which is of the order of the oxygen partial pressure to be measured, and **in that**, for this purpose a charge carrier quantity is transported via the pumping current, which charge carrier quantity is proportional to the oxygen partial pressure to be adjusted in the reference volume.

**6.** The method according to claim 5, **characterised in that**, for purposes of adjusting a defined oxygen partial pressure in the reference volume during the second phase (Phase II) at least one pumping current impulse is applied to the solid electrolyte cell (4), and **in that**, the duration of the at least one pumping current impulse is selected such that the current-time integral, made up from the amplitude of the pumping current impulse and the impulse duration, corresponds to the charge carrier quantity, and is proportional to the oxygen partial pressure to be adjusted in the reference volume.

**7.** The method according to claim 5 or 6, **characterised in that**, after termination of the second phase , and preferably after terminatiuon of a third phase (Phase III), following the second phase and serving as an attenuation phase, the oxygen partial pressure of the gas to be measured is determined from the measured voltage ($U_M$) present in a measurement phase (Phase IV).

**8.** The method according to one of the preceding claims, **characterised in that** the measurement cycle having at least the first phase (Phase I), the second phase (Phase II) and the measurement phase (Phase IV), is periodically repeated.

**9.** The method according to claim 8, **characterised in that** the pumping current ($I_p$) and/or the duration of the pumping current ($I_p$) in the second phase (Phase II) is altered and/or adjusted, such that the voltage ($U_M$) measured in the measurement phase (Phase IV) has a prescribed constant, or essentially constant, value, and that, the oxygen partial pressure of the gas to be measured is determined from the current-time integral of the amplitude of the pumping current ($I_p$) and the duration ($t_{fill}$) of the pumping current ($I_p$) in the second phase (Phase II).

**10.** The method according to claim 9, **characterised in that** the pumping current ($I_p$) in the second phase (Phase II) is constant with regard to amplitude and profile, that, for purposes of achieving the prescribed constant voltage value in the measurement phase (Phase IV), for example, a voltage of zero, the duration ($t_{fill}$) of the pumping current ($I_p$) in the second phase (Phase II) is adjusted and/or regulated, and that, the oxygen partial pressure of the gas to be measured is determined from the duration ($t_{fill}$) of the pumping current ($I_p$).

**11.** The method according to one of the preceding claims, **characterised in that**, with a known ambient pressure the oxygen concentration is determined from the oxygen partial pressure in question.

**12.** The method according to one of the preceding claims, **characterised in that** the oxygen partial pressure of the reference volume is deduced from a reference measurement with a known oxygen partial pressure of the gas to be measured.

**13.** The method in accordance with one of the preceding claims, **characterised in that**, for purposes of adjusting an internal resistance of the solid electrolyte cell (4), which is a function of the temperature of the solid electrolyte cell (4) or of the solid electrolyte (2), a sequence containing the first, second and third phases (I, II, III) is repeated multiple times in a resistance adjustment method.

**14.** The method according to claim 13, **characterised in that**, following on from the conditioning method in question the internal resistance of the solid electrolyte cell (4) is determined, and with this resistance the cell temperature of the solid electrolyte cell (4) is determined, or the cell temperature of the solid electrolyte cell (4) is controlled or regulated as a function of this resistance.

**15.** The method according to one of the preceding claims, **characterised in that** the oxygen partial pressure in the reference volume is adjusted as a function of the oxygen partial pressure in the gas to be measured that is to be anticipated from the measurement, preferably such that the ratio of "oxygen partial pressure in the gas to be measured/oxygen partial pressure in the reference volume" is 2.7, or approximately 2.7, for example 2.718.

**16.** A device for measuring the oxygen partial pressure or the oxygen content in a gas to be measured in at least one measurement cycle using a solid electrolyte cell (4) with at least one oxygen-conducting solid electrolyte (2) and with at least one reference electrode (3.1) and at least one measurement electrode (3.2), wherein the at least one measuring electrode (3.2) is in contact with the measurement gas, and the at least one reference electrode (3.1) is in contact with a reference gas, or reference volume, separated from the gas to be measured, wherein for a pumping operation a current is imposed on the solid electrolyte cell (4) via the electrodes, and a measured voltage (UM) is tapped off from the electrodes (3.1, 3.2), and with a regulation and control unit (10) regulating the measurement method,
**characterised in that**
the regulation and control unit (10) is designed for the execution of the measurement method in accordance with one of the preceding claims.

**Revendications**

**1.** Procédé pour mesurer la pression partielle d'oxygène ou la teneur en oxygène dans un gaz de mesure dans au moins un cycle de mesure en utilisant une cellule d'électrolyte fixe (4) avec au moins un électrolyte fixe (2) conduisant de l'oxygène et avec au moins une électrode de référence (3.1) ainsi qu'au moins une électrode de mesure (3.2), l'au moins une électrode de mesure (3.2) étant en relation avec le gaz de mesure et l'au moins une électrode de référence (3.1) étant en relation avec un gaz de référence ou un volume de référence séparé du gaz de mesure, un courant étant appliqué via les électrodes à la cellule d'électrolyte fixe (4) pour un fonctionnement de pompage, et une tension de mesure ($U_M$) étant prélevée aux électrodes (3.1, 3.2),
**caractérisé en ce que**,
dans une première phase (phase I) du cycle de mesure, la pression partielle d'oxygène du volume de référence est réduite, par l'intermédiaire de la cellule d'électrolyte fixe (4) exploitée lors du fonctionnement de pompe, jusqu'à ce qu'elle soit inférieure à la pression partielle d'oxygène du gaz de mesure de manière à ce que la tension de mesure ($U_M$) utilisée dans une phase de mesure (phase IV) pour la détermination de la pression partielle d'oxygène ou de la teneur en oxygène du gaz de mesure soit déterminée uniquement, ou sensiblement uniquement grâce au quotient de pression partielle d'oxygène de la pression partielle d'oxygène du gaz de mesure par le gaz de référence.

**2.** Procédé selon la revendication 1, **caractérisé en ce que** la pression partielle d'oxygène dans la première phase est réduite à une valeur nettement inférieure à 1% de la pression partielle d'oxygène du gaz de mesure.

**3.** Procédé selon la revendication 1 ou 2, **caractérisé en ce que** la première phase est terminée lorsque la tension (UM) appliquée aux électrodes (3.1, 3.2) dans cette phase dépasse une valeur de seuil de tension (16.1) prescrite.

**4.** Procédé selon la revendication 3, **caractérisé en ce que** la valeur de seuil de tension (16.1) se compose d'une composante, laquelle est générée par une chute de tension du courant de pompage (Ip), et d'une composante, laquelle résulte du quotient de pression partielle d'oxygène, et **en ce que** la chute de tension résultant du courant de pompage (Ip) au sein de la première phase (phase I) est déterminée à un moment où la tension ($U_M$) appliquée aux électrodes (3.1, 3.2) est déterminée uniquement, ou sensiblement uniquement par la chute de tension du courant de pompage.

**5.** Procédé selon l'une des revendications précédentes, **caractérisé en ce que**, une fois la première phase achevée, lors d'une deuxième phase (phase II), le volume de référence est amené par remplissage à une pression partielle d'oxygène définie grâce à la cellule d'électrolyte fixe (4) exploitée lors du fonctionnement de pompage, laquelle est de l'ordre de grandeur de la pression partielle d'oxygène à mesurer, et **en ce que** pour ce faire, on transporte via le courant de pompage une quantité de porteurs de charge qui est proportionnelle à la pression partielle d'oxygène à régler dans le volume de référence.

**6.** Procédé selon la revendication 5, **caractérisé en ce que**, pour le réglage d'une pression partielle d'oxygène définie dans le volume de référence pendant la deuxième phase (phase II), au moins une impulsion de courant de pompage est appliquée à la cellule d'électrolyte fixe (4), et **en ce que** la durée de l'au moins une impulsion de courant de pompage est choisie de manière à ce que l'intégrale de courant-temps soit fonction de l'amplitude de l'impulsion de courant de pompage et de la durée d'impulsion de la quantité de porteurs de charge et soit proportionnelle à la pression partielle d'oxygène à régler dans le volume de référence.

7.  Procédé selon la revendication 5 ou 6, **caractérisé en ce que**, après l'achèvement de la deuxième phase et de préférence après l'achèvement d'une troisième phase (phase III) succédant à la deuxième phase et servant de phase de relâchement on détermine, à partir de la tension de mesure ($U_M$) appliquée dans la phase de mesure (phase IV), la pression partielle d'oxygène du gaz de mesure.

8.  Procédé selon l'une des revendications précédentes, **caractérisé en ce que** le cycle de mesure présentant au moins la première phase (phase I), la deuxième phase (phase II) et la phase de mesure (phase IV), est répété périodiquement.

9.  Procédé selon la revendication 8, **caractérisé en ce que** le courant de pompage (Ip) et/ou la durée du courant de pompage (Ip) sont modifiés et/ou réglés dans la deuxième phase (phase II) de manière à ce que la tension de mesure ($U_M$) mesurée dans la phase de mesure (phase IV) présente une valeur de tension constante ou sensiblement constante prescrite et **en ce que** l'on détermine, à partir de l'intégrale de courant-temps de l'amplitude du courant de pompage et de la durée ($t_{nn}$) du courant de pompage (Ip) dans la deuxième phase (phase II), la pression partielle d'oxygène du gaz de mesure.

10. Procédé selon la revendication 9, **caractérisé en ce que** le courant de pompage (Ip) dans la deuxième phase (phase II) est constant concernant l'amplitude et le trajet, **en ce que**, pour l'obtention de la valeur de tension constante prescrite dans la phase de mesure (phase IV), par exemple de la tension nulle, on règle et/ou ajuste la durée ($t_{nn}$) du courant de pompage (Ip) dans la deuxième phase (phase II), et **en ce que** l'on détermine la pression partielle d'oxygène du gaz de mesure à partir de la durée ($t_{nn}$) du courant de pompage (Ip).

11. Procédé selon l'une des revendications précédentes, **caractérisé en ce que**, en cas de pression ambiante connue, on détermine la concentration en oxygène à partir de la pression partielle d'oxygène respective.

12. Procédé selon l'une des revendications précédentes, **caractérisé en ce que**, grâce à une mesure de référence avec une pression partielle d'oxygène connue du gaz de mesure, on en déduit la pression partielle d'oxygène du volume de référence.

13. Procédé selon l'une des revendications précédentes, **caractérisé en ce que**, pour le réglage de la résistance interne de la cellule d'électrolyte fixe (4), laquelle est une fonction de la température de la cellule d'électrolyte fixe (4) ou de l'électrolyte fixe (2), on répète plusieurs fois, dans une procédure de réglage de résistance, une séquence contenant la première, la deuxième et la troisième phase (I, II, III).

14. Procédé selon la revendication 13, **caractérisé en ce que**, suite à la procédure respective de conditionnement, on détermine la résistance interne de la cellule d'électrolyte fixe (4) et détermine la température de cellule de la cellule d'électrolyte fixe (4) avec cette résistance, ou bien **en ce que** l'on régule ou règle la température de cellule de la cellule d'électrolyte fixe (4) en fonction de cette résistance.

15. Procédé selon l'une des revendications précédentes, **caractérisé en ce que** l'on règle la pression partielle d'oxygène dans le volume de référence en fonction de la pression partielle d'oxygène à prévoir dans le gaz de mesure lors de la mesure, de préférence de manière à ce que le rapport « pression partielle d'oxygène dans le gaz de mesure / pression partielle d'oxygène dans le volume de référence » soit de 2,7 ou approximativement de 2,7, par exemple de 2,718.

16. Dispositif pour mesurer la pression partielle d'oxygène ou la teneur en oxygène dans un gaz de mesure dans au moins un cycle de mesure en utilisant une cellule d'électrolyte fixe (4) avec au moins un électrolyte fixe (2) conduisant de l'oxygène et avec au moins une électrode de référence (3.1) ainsi qu'au moins une électrode de mesure (3.2), l'au moins une électrode de mesure (3.2) étant en relation avec le gaz de mesure et l'au moins une électrode de référence (3.1) étant en relation avec un gaz de référence ou un volume de référence séparé du gaz de mesure, un courant étant appliqué via les électrodes à la cellule d'électrolyte fixe (4) pour un fonctionnement de pompage et une tension de mesure ($U_M$) étant prélevée aux électrodes (3.1, 3.2), ainsi qu'avec une unité de commande et de contrôle (10) pour commander le procédé de mesure, **caractérisé en ce que**,

l'unité de commande et de contrôle (10) est réalisée pour la mise en oeuvre du procédé de mesure selon l'une des revendications précédentes.

Fig. 1

EP 2 647 988 B1

$U_M$

Messspannung zwischen innerer und äußerer Elektrode

1. Leerpumpen bis Spannungsschwelle $U_{stop}$ erreicht ist

16.1

16

~I·R$_i$

2. Referenz-partialdruck einstellen: I·t$_{fill}$

3. Abklingzeit der Polarisationseffekte

4. potentiometrische Messung (Nernstzelle)

Zeit

Phase I

Phase II

Phase III

Phase IV

**Fig. 2**

$U_M$

Messspannung zwischen innerer und äußerer Elektrode

1. Leerpumpen bis Spannungsschwelle $U_{sup}$ erreicht ist

16.1

16

$\sim I \cdot R_i$

2. Vollpumpen Dauer: $t_{fill}$

3. Abklingzeit der Polarisationseffekte

Phase IV

Phase I

Phase II

Phase III

Zeit

4. Messen der Nernstspannung
>0mV => tfill vergrößern
<0mV => tfill verkleinern

16.1

Fig. 3

EP 2 647 988 B1

Fig. 4

O2-Konzentration

17

$t_{fill}$

EP 2 647 988 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0698209 A
- DE 19800027

- DE 102009047359 A1